# EUROPÄISCHE PATENTSCHRIFT

(11) **EP 3 876 891 B1**
(45) Veröffentlichungstag und Bekanntmachung des Hinweises auf die Patenterteilung: **31.01.2024**
(21) Anmeldenummer: 19801502.6
(22) Anmeldetag: 31.10.2019
(51) Int. Cl.: A61G 12/00, A61G 13/10

(54) **VERSORGUNGSVORRICHTUNG ZUM BEREITSTELLEN ZUMINDEST EINES VERSORGUNGSPRODUKTS**
SUPPLY DEVICE FOR PROVIDING AT LEAST ONE SUPPLYING PRODUCT
DISPOSITIF D'ALIMENTATION PERMETTANT DE FOURNIR AU MOINS UN PRODUIT D'ALIMENTATION

(30) Priorität: 05.11.2018 EP 18204425
(43) Veröffentlichungstag der Anmeldung: 15.09.2021
(73) Patentinhaber: Ondal Medical Systems GmbH, 36088 Hünfeld (DE)
(72) Erfinder: ABEL, Markus, 36037 Fulda (DE); KIEL, Hartmuth, 36151 Burghaun (DE); OGINSKI, Stefan, 36041 Fulda (DE); PERPLIES, Stefan, 36088 Hünfeld (DE)
(74) Vertreter: Graf von Stosch Patentanwaltsgesellschaft mbH
(86) Internationale Anmeldenummer: PCT/EP2019/079939
(87) Internationale Veröffentlichungsnummer: WO 2020/094519

(56) Entgegenhaltungen:
- DE-A1- 19 748 480
- US-A1- 2006 102 811
- US-A1- 2017 014 291

## Beschreibung

### Technisches Gebiet

Die vorliegende Erfindung betrifft eine Versorgungsvorrichtung zum Bereitstellen zumindest eines Versorgungsprodukts.

### Stand der Technik

Es ist bekannt, in medizinischen Einrichtungen, beispielsweise Kliniken, Krankenhäusern, Arztpraxen und vergleichbaren Einrichtungen, in einem Behandlungsraum etwaige benötigte Versorgungsprodukte wie elektrischen Strom, Daten oder medizinische Gase über eine Versorgungseinheit bereitzustellen.

Bekannte Versorgungseinheiten sind dabei mit einer Tragvorrichtung zu einem System kombiniert. Die Tragvorrichtung weist in der Regel einen Auslegerarm auf, welcher gegenüber einer an einer Decke des Behandlungsraums angeordneten Montageeinheit über mindestens eine Schwenkachse herum schwenkbar angeordnet ist. Die eigentliche Versorgungseinheit ist mit dem Auslegerarm über eine Schnittstelle verbunden beziehungsweise an diesen angekoppelt. Die Tragvorrichtung stellt mithin die Schnittstelle zur Decke dar und legt den möglichen Bewegungsbereich und Bewegungsradius fest, die Versorgungseinheit stellt wiederum die Versorgung mit elektrischem Strom, Daten und medizinischen Gasen bereit.

Bei den bekannten Kombinationen ist mithin stets eine Schnittstelle vonnöten, welche beide Teilsysteme, die Tragvorrichtung und die Versorgungseinheit, miteinander verbindet. Bei diesem Aufbau sind eine große Anzahl von Bauteilen und dementsprechend eine große Anzahl von Montageschritten zur Verbindung der Tragvorrichtung und der Versorgungseinheit nötig. Zudem liegen dadurch an den Verbindungsstellen zwischen Tragvorrichtung und Versorgungseinheit Fugen vor, welche eine Desinfektion des Systems aus Tragvorrichtung und Versorgungseinheit erschweren. Dokument DE19748480 offenbart eine Versorgungsvorrichtung mit allen technischen Merkmalen des Oberbegriffs von Anspruch 1.

### Darstellung der Erfindung

Ausgehend von dem bekannten Stand der Technik ist es eine Aufgabe der vorliegenden Erfindung, eine verbesserte Versorgungsvorrichtung zum Bereitstellen zumindest eines Versorgungsprodukts bereitzustellen.

Die Aufgabe wird durch eine Versorgungsvorrichtung zum Bereitstellen zumindest eines Versorgungsprodukts mit den Merkmalen des Anspruchs 1 gelöst. Vorteilhafte Weiterbildungen ergeben sich aus den Unteransprüchen, der Beschreibung und den Figuren.

Entsprechend wird eine Versorgungsvorrichtung zum Bereitstellen zumindest eines Versorgungsprodukts vorgeschlagen, umfassend eine Montageeinheit zum Montieren der Vorrichtung an eine Abstützung, bevorzugt eine Decke eines Raumes, und einen Auslegerarm, wobei der Auslegerarm relativ zur Montageeinheit um eine vertikale Schwenkachse schwenkbar angeordnet ist. Erfindungsgemäß weist der Auslegerarm zumindest einen direkt in dem Auslegerarm integrierten Anschluss für ein Versorgungsprodukt auf.

Dadurch, dass der Auslegerarm zumindest einen direkt in dem Auslegerarm integrierten Anschluss für ein Versorgungsprodukt aufweist, kann auf eine separate, an den Auslegerarm anzubringende Versorgungseinheit zum Bereitstellen des Versorgungsprodukts verzichtet werden. Hierdurch kann zum einen im Vergleich zu herkömmlichen Versorgungsvorrichtungen eine schlankere Bauform erzielt werden. Zudem ergibt sich ein einfacherer Aufbau, da auch die Bauteile, welche zum Verbinden des Auslegerarms und der ansonsten benötigten Versorgungseinheit notwendig wären, entfallen. Aufgrund des reduzierten Material- und Teilebedarfs lassen sich der Montageaufwand und die Herstellkosten reduzieren.

Der Auslegerarm ist entlang seiner Längserstreckung im Wesentlichen einstückig ausgebildet. Mit anderen Worten ist der Auslegerarm als im Wesentlichen durchgehendes, in Längserstreckung oder Längsrichtung sich erstreckendes Einzelteil ausgebildet. Somit liegen keine Verbindungsstellen zwischen dem Bereich des Auslegerarms, in welchem der zumindest eine Anschluss für ein Versorgungsprodukt angeordnet ist, und der schwenkbaren Verbindung zum Montageeinheit vor. Dies steht im Gegensatz zu herkömmlichen Versorgungsvorrichtungen, bei welchen der Auslegerarm lediglich als Verbindungseinheit zwischen der Verbindung zur Montageeinheit und einer als separater Komponente an den Auslegerarm befestigten Versorgungseinheit, welche die Anschüsse für ein Versorgungsprodukt aufweist, vorgesehen ist. Folglich weist der Auslegerarm zwischen der gelenkigen Anbindung zur Montageeinheit und dem zumindest einen Anschluss für ein Versorgungsprodukt typischerweise im Wesentlichen auch keine Fugen auf.

Durch die Integration des mindestens einen Anschlusses in den Auslegerarm kann zudem eine größere Durchgangshöhe für eine Person, beispielsweise medizinisches Personal, bereitgestellt werden, als dies bei Versorgungsvorrichtungen mit separater Versorgungseinheit der Fall ist. Zudem ist der benötigte Platzbedarf der Versorgungsvorrichtung gegenüber herkömmlichen Vorrichtungen reduziert.

Aufgrund des Fehlens der Fugen an den Verbindungstellen zwischen dem Auslegerarm und der nicht benötigten Versorgungseinheit kann auch eine Reinigung, insbesondere eine Desinfektion, der Versorgungsvorrichtung vereinfacht werden. Zudem ist dadurch ein Absetzen und/oder Ansiedeln von Keimen an der Versorgungsvorrichtung erschwert. Folglich lassen sich die hygienischen Bedingungen insgesamt verbessern.

Unter "vertikal" wird hier insbesondere eine Ausrichtung parallel zur Gravitationsrichtung verstanden.

Der Auslegerarm weist vorzugsweise eine Gelenkeinheit auf, in welcher eine erste gelenkige Lagerung zur Bereitstellung der Schwenkbarkeit des Auslegerarms um die vertikale Schwenkachse, sowie eine zweite gelenkige Lagerung zum Bereitstellen der Schwenkbarkeit des Auslegerarms um die horizontale Schwenkachse integriert ist. Vorzugsweise ist der Auslegerarm von der Montageeinheit durch eine Säule beabstandet, welche sich von der Montageeinheit zur Gelenkeinheit erstreckt. Die Gelenkeinheit kann optional ein Gelenkgehäuse aufweisen, welches die Gelenkeinheit einhaust.

Weiterhin kann der Auslegerarm an dessen freiem Ende gegenüber der schwenkbaren Anbindung an die Montageeinheit eine Endabdeckung aufweisen, um die freie Stirnseite des Auslegerarms zu verdecken beziehungsweise zu verschließen.

Gemäß einer bevorzugen Ausführungsform ist eine Mehrzahl von Anschlüssen in den Auslegerarm integriert. Somit kann durch den Auslegerarm eine Vielzahl oder gar alle der benötigten Produkte bereitgestellt werden.

Bevorzugt ist zumindest ein Anschluss an einer Seite des Auslegerarms und/oder einer Unterseite des Auslegerarms angeordnet. Dadurch lassen sich die Variabilität der Versorgungsvorrichtung und die Erreichbarkeit der einzelnen Anschlüsse verbessern.

Gemäß einer weiter bevorzugten Ausführungsform ist ein Anschluss als Anschluss für elektrischen Strom, als Anschluss für digitale und/oder analoge Daten und/oder als Anschluss für ein medizinisches Gas ausgebildet, wobei ein Anschluss für ein medizinisches Gas, bevorzugt zum Bereitstellen von Sauerstoff (O₂), medizinische Luft, sogenannter "Aer medicalis", Kohlenstoffdioxid (CO₂), Lachgas (N₂O), Xenon (Xe), Stickstoffmonoxid (NO), Helium (He), Stickstoff (N₂), Kohlenmonoxid (CO) und/oder Schwefelwasserstoff (H₂S) ausgebildet ist. Dadurch ist es möglich, nahezu alle oder gar alle benötigten Versorgungsprodukte durch die Versorgungsvorrichtung bereitzustellen.

Wenn der Auslegerarm einen Bediengriff zum Positionieren des Auslegerarms aufweist, kann eine Person, beispielsweise medizinisches Personal, die Position des Auslegerarms durch Betätigen des Bediengriffs in einfacher Weise verändern. In einer bevorzugten Weiterführung weist der Bediengriff mindestens ein Betätigungselement auf, durch welches eine elektrische, magnetische, hydraulische, pneumatische oder andersgeartete Unterstützung zum Positionieren des Auslegerarms aktiviert und/oder deaktiviert werden kann.

Gemäß einer weiter bevorzugten Ausführungsform ist der Bediengriff derart ausgebildet, dass mindestens eine Leitung und/oder mindestens ein Schlauch an den Bediengriff angebracht werden kann, bevorzugt eingehängt werden kann. Dadurch ist es möglich, eine Zugentlastung für eine Steckverbindung zwischen dem Ende des Schlauches oder der Leitung und einem Anschluss bereitzustellen.

Um eine größere Variabilität der Versorgungsvorrichtung zusätzlich bereitstellen zu können, kann der Auslegerarm relativ zur Montageeinheit ferner um eine horizontale Schwenkachse zumindest innerhalb eines vorgegebenen Winkelbereichs schwenkbar sein.

Unter "horizontal" wird hier insbesondere eine Ausrichtung senkrecht zur vertikalen Schwenkachse verstanden.

Gemäß einer weiter bevorzugten Ausführungsform ist eine Position des Auslegerarms relativ zur vertikalen Schwenkachse und/oder zur horizontalen Schwenkachse durch Reibung, Magnetismus und/oder Pneumatik fixierbar. Dadurch kann sichergestellt werden, dass der Auslegerarm sicher in seiner durch eine Person eingestellten Stellung bzw. Position verbleibt. So kann verhindert werden, dass es aufgrund einer ungewollten und unvorhergesehenen Bewegung des Auslegerarms zu Beschädigungen von Gegenständen oder Verletzungen von Personen kommt.

Um eine Verstellung der Position des Auslegerarms relativ zur vertikalen Schwenkachse und/oder zur horizontalen Schwenkachse zu unterstützen, kann eine Motoreinheit, bevorzugt eine einen Elektromotor aufweisende Motoreinheit, zum Unterstützen einer Verstellung der Position des Auslegerarms relativ zur vertikalen Schwenkachse und/oder zur horizontalen Schwenkachse in die Vorrichtung integriert sein.

Alternativ oder zusätzlich kann auch ein Federschwenkstativ zum Unterstützen einer Verstellung der Position des Auslegerarms relativ zur vertikalen Schwenkachse und/oder zur horizontalen Schwenkachse in die Vorrichtung integriert sein.

Gemäß einer weiter bevorzugten Ausführungsform ist der Auslegerarm als einstückiges Strangpressprofil, bevorzugt als Aluminium-Strangpressprofil, ausgebildet und/oder ist zumindest ein Anschluss auswechselbar und/oder modular ausgebildet. Dadurch ist es möglich, den Auslegerarm in einfacher Weise in verschiedenen Längen bereitzustellen, und die Versorgungsvorrichtung bedarfsgerecht an eine jeweilige Einsatzsituation anzupassen.

Wenn in dem Auslegerarm eine bauliche Trennung von elektrischen Bauteilen, insbesondere ein Anschluss für elektrischen Strom und/oder ein Anschluss für digitale und/oder analoge Daten, und ggf. Anschlüsse für medizinische Gase vorgesehen ist/sind, kann eine besonders sicher ausgebildete Versorgungsvorrichtung bereitgestellt werden.

### Kurze Beschreibung der Figuren

Bevorzugte weitere Ausführungsformen der Erfindung werden durch die nachfolgende Beschreibung der Figuren näher erläutert. Dabei zeigen:
- Figur 1: schematisch eine perspektivische Seitenansicht einer Versorgungsvorrichtung zum Bereitstellen zumindest eines Versorgungsprodukts gemäß einer ersten Ausführungsform;
- Figur 2: schematisch eine perspektivische Seitenansicht einer Versorgungsvorrichtung zum Bereitstellen zumindest eines Versorgungsprodukts gemäß einer weiteren Ausführungsform; und
- Figur 3: schematisch die Versorgungsvorrichtung aus Figur 2 in einer weiteren perspektivischen Seitenansicht.

### Detaillierte Beschreibung bevorzugter Ausführungsbeispiele

Im Folgenden werden bevorzugte Ausführungsbeispiele anhand der Figuren beschrieben. Dabei werden gleiche, ähnliche oder gleichwirkende Elemente in den unterschiedlichen Figuren mit identischen Bezugszeichen versehen, und auf eine wiederholte Beschreibung dieser Elemente wird teilweise verzichtet, um Redundanzen zu vermeiden.

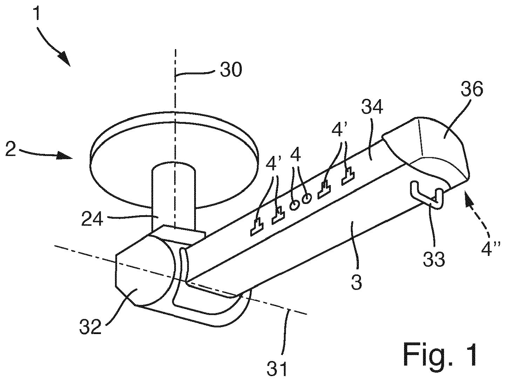

In Figur 1 ist schematisch eine perspektivische Seitenansicht einer Versorgungsvorrichtung 1 zum Bereitstellen zumindest eines Versorgungsprodukts gemäß einer ersten Ausführungsform gezeigt. Die Versorgungsvorrichtung 1 zum Bereitstellen zumindest eines Versorgungsprodukts 1 umfasst eine Montageeinheit 2 zum Montieren der Versorgungsvorrichtung an eine Abstützung, bevorzugt eine Decke eines Raumes, und einen Auslegerarm 3, wobei der Auslegerarm 3 relativ zur Montageeinheit 2 um eine vertikale Schwenkachse 30 schwenkbar angeordnet ist. Der Auslegerarm 3 weist eine Mehrzahl von direkt in den Auslegerarm 3 integrierten Anschlüsse 4, 4', 4" für ein Versorgungsprodukt auf, welche auf beiden Seiten 34 des Auslegerarms 3 vorgesehen sind.

Dabei sind Anschlüsse 4 für elektrischen Strom und Anschlüsse 4' für digitale und/oder analoge Daten auf der hier sichtbaren Seite 34 vorgesehen. Auf der der hier sichtbaren Seite 34 gegenüberliegenden Seite des Auslegerarms 3 sind ferner eine Mehrzahl von Anschlüssen 4" für ein medizinisches Gas ausgebildet ist, wobei jeweils ein Anschluss 4" für ein medizinisches Gas zum Bereitstellen von Sauerstoff O₂, medizinischer Luft, Kohlenstoffdioxid CO₂, Lachgas N₂O, Xenon Xe, Stickstoffmonoxid NO, Helium He, und Stickstoff N₂ ausgebildet ist. Fernerhin können Anschlüsse 4" zum Bereitstellen von Kohlenmonoxid CO und/oder Schwefelwasserstoff H₂S ausgebildet sein.

Der Auslegerarm 3 weist ferner einen Bediengriff 33 zum Positionieren des Auslegerarms 3 auf, welcher derart ausgebildet ist, dass mindestens eine Leitung und/oder mindestens ein Schlauch an den Bediengriff 33 angebracht werden kann, insbesondere eingehängt werden kann.

In der vorliegenden Ausführungsform ist der Auslegerarm 3 relativ zur Montageeinheit 2 ferner um eine horizontale Schwenkachse 31 zumindest innerhalb eines vorgegebenen Winkelbereichs schwenkbar. Der Winkelbereich erstreckt sich hier zwischen einer Ausrichtung des Auslegerarms 3 senkrecht zur vertikalen Schwenkachse 30 in Gravitationsrichtung bis zu einem Winkel von 45° bezogen auf die Ausrichtung des Auslegerarms 3 senkrecht zur vertikalen Schwenkachse 30. Alternativ können auch andere Winkel für den Bereich vorgegeben werden, beispielsweise 15°, 30° oder 60°.

Der Auslegerarm 3 ist von der Montageeinheit 2 durch eine Säule 24 beabstandet. Der Auslegerarm 3 weist eine Gelenkeinheit 32 auf, in welcher eine erste gelenkige Lagerung zur Bereitstellung der Schwenkbarkeit des Auslegerarms 3 um die vertikale Schwenkachse 30, sowie eine zweite gelenkige Lagerung zum Bereitstellen der Schwenkbarkeit des Auslegerarms 3 um die horizontale Schwenkachse 31 integriert ist.

In der Gelenkeinheit 32 ist ferner eine Reibungsanordnung integriert, durch welche eine Position des Auslegerarms 3 relativ zur vertikalen Schwenkachse 30 mittels Reibung fixierbar ist.

Alternativ oder zusätzlich kann in der Gelenkeinheit 32 ferner eine Anordnung integriert sein, durch welche eine Position des Auslegerarms 3 relativ zur horizontalen Schwenkachse 31 und/oder zur vertikalen Schwenkachse 30 durch Reibung, Magnetismus und/oder Pneumatik fixierbar ist.

Optional kann ferner eine Motoreinheit, bevorzugt eine einen Elektromotor aufweisende Motoreinheit, zum Unterstützen einer Verstellung der Position des Auslegerarms 3 relativ zur vertikalen Schwenkachse 30 und/oder zur horizontalen Schwenkachse 31 in die Versorgungsvorrichtung 1 integriert sein, bevorzugt in der Gelenkeinheit 32.

Vorliegend ist in der Gelenkeinheit 32 ferner ein Federschwenkstativ zum Unterstützen einer Verstellung der Position des Auslegerarms 3 relativ zur horizontalen Schwenkachse 31 in die Versorgungsvorrichtung integriert.

Die Gelenkeinheit 32 weist ein optionales Gelenkgehäuse auf, welches das Innere der Gelenkeinheit 32 von der Umgebung trennt.

Der Auslegerarm 3 ist als Aluminium-Strangpressprofil ausgebildet, an dessen Ende eine Endabdeckung 36 angeordnet ist. Folglich ist der Auslegerarm 3 als im Wesentlichen durchgehendes sich in Längserstreckung erstreckendes Einzelteil ausgebildet, so dass keine Verbindungsstellen oder Fugen zwischen dem Bereich des Auslegerarms 3, in welchem die Anschlüsse 4, 4', 4" angeordnet sind, und der Gelenkeinheit 32, vorliegen.

Um die Sicherheit zu erhöhen, ist in dem Auslegerarm 3 eine bauliche Trennung von elektrischen Bauteilen, insbesondere den Anschlüssen 4 für elektrischen Strom und den 4' Anschlüssen für digitale und/oder analoge Daten, und den Anschlüssen 4" für medizinische Gase vorgesehen.

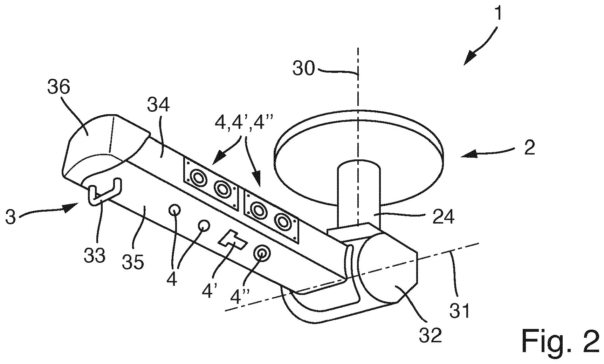

Figur 2 zeigt schematisch eine perspektivische Seitenansicht einer Versorgungsvorrichtung 1 zum Bereitstellen zumindest eines Versorgungsprodukts gemäß einer weiteren Ausführungsform.

Die Versorgungsvorrichtung 1 entspricht im Wesentlichen der in Figur 1 gezeigten. Sie weist jedoch zusätzlich an ihrer Unterseite 35 Anschlüsse 4, 4' auf.

Zudem sind die Anschlüsse 4, 4', 4" an den Seiten 34 modular auswechselbar ausgebildet.

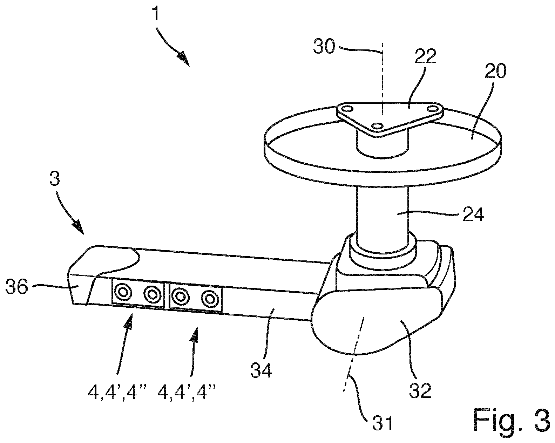

Figur 3 zeigt schematisch die Versorgungsvorrichtung 1 aus Figur 2 in einer weiteren perspektivischen Seitenansicht. Deutlich zu erl<ennen ist hier, dass die Montageeinheit 2 einen Flansch 22 zum tragenden Fixieren der Versorgungsvorrichtung 1 an einer Decke eines mit der Versorgungsvorrichtung 1 auszustattenden Raumes aufweist. Zur Verbesserung der Hygiene kann der Flansch 22 durch eine entlang der vertikalen Schwenkachse 30 verschiebbaren Abdeckplatte 20 abgedeckt werden.

### Bezugszeichenliste

- 1: Versorgungsvorrichtung
- 2: Montageeinheit
- 20: Abdeckplatte
- 22: Flansch
- 24: Säule
- 3: Auslegerarm
- 30: vertikale Schwenkachse
- 31: horizontale Schwenkachse
- 32: Gelenkeinheit
- 33: Bediengriff
- 34: Seite
- 35: Unterseite
- 36: Endabdeckung
- 4: Anschluss für elektrischen Strom
- 4': Anschluss für digitale und/oder analoge Daten
- 4": Anschluss für ein medizinisches Gas

## Patentansprüche

1. Versorgungsvorrichtung (1) zum Bereitstellen zumindest eines Versorgungsprodukts, umfassend
eine Montageeinheit (2) zum Montieren der Versorgungsvorrichtung (1) an eine Abstützung, bevorzugt eine Decke eines Raumes, und
einen Auslegerarm (3), wobei der Auslegerarm (3) relativ zur Montageeinheit (2) um eine vertikale Schwenkachse (30) schwenkbar angeordnet ist,
**dadurch gekennzeichnet, dass**
der Auslegerarm (3) entlang seiner Längserstreckung im Wesentlichen einstückig ausgebildet ist und der Auslegerarm (3) zumindest einen direkt in den Auslegerarm (3) integrierten Anschluss (4, 4', 4") für ein Versorgungsprodukt aufweist.

2. Vorrichtung (1) gemäß Anspruch 1, **dadurch gekennzeichnet, dass** eine Mehrzahl von Anschlüssen (4, 4', 4") in den Auslegerarm (3) integriert ist und/oder zumindest ein Anschluss (4, 4', 4") an einer Seite (34) des Auslegerarms (3) und/oder einer Unterseite (35) des Auslegerarms (3) angeordnet ist.

3. Vorrichtung (1) gemäß einem der vorstehenden Ansprüche, **dadurch gekennzeichnet, dass** ein Anschluss (4, 4', 4") als Anschluss (4) für elektrischen Strom, als Anschluss (4') für digitale und/oder analoge Daten und/oder als Anschluss (4") für ein medizinisches Gas ausgebildet ist, wobei ein Anschluss (4") für ein medizinisches Gas bevorzugt zum Bereitstellen von Sauerstoff (O₂), medizinische Luft, Kohlenstoffdioxid (CO₂), Lachgas (N₂O), Xenon (Xe), Stickstoffmonoxid (NO), Helium (He), Stickstoff (N₂), Kohlenmonoxid (CO) und/oder Schwefelwasserstoff (H₂S) ausgebildet ist.

4. Vorrichtung (1) gemäß einem der vorstehenden Ansprüche, **dadurch gekennzeichnet, dass** der Auslegerarm (3) einen Bediengriff (33) zum Positionieren des Auslegerarms (3) aufweist.

5. Vorrichtung (1) gemäß Anspruch 4, **dadurch gekennzeichnet, dass** der Bediengriff (33) derart ausgebildet ist, dass mindestens eine Leitung und/oder mindestens ein Schlauch an den Bediengriff (33) angebracht werden kann, bevorzugt eingehängt werden kann.

6. Vorrichtung (1) gemäß einem der vorstehenden Ansprüche, **dadurch gekennzeichnet, dass** der Auslegerarm (3) relativ zur Montageeinheit (2) ferner um eine horizontale Schwenkachse (31) zumindest innerhalb eines vorgegebenen Winkelbereichs schwenkbar ist.

7. Vorrichtung (1) gemäß einem der vorstehenden Ansprüche, **dadurch gekennzeichnet, dass** eine Position des Auslegerarms (3) relativ zur vertikalen Schwenkachse (30) und/oder zur horizontalen Schwenkachse (31) durch Reibung, Magnetismus und/oder Pneumatik fixierbar ist.

8. Vorrichtung (1) gemäß einem der vorstehenden Ansprüche, **dadurch gekennzeichnet, dass** eine Motoreinheit, bevorzugt eine einen Elektromotor aufweisende Motoreinheit, zum Unterstützen einer Verstellung der Position des Auslegerarms (3) relativ zur vertikalen Schwenkachse (30) und/oder zur horizontalen Schwenkachse (31) in die Versorgungsvorrichtung (1) integriert ist.

9. Vorrichtung (1) gemäß einem der vorstehenden Ansprüche, **dadurch gekennzeichnet, dass** ein Federschwenkstativ zum Unterstützen einer Verstellung der Position des Auslegerarms (3) relativ zur vertikalen Schwenkachse (30) und/oder zur horizontalen Schwenkachse (31) in die Versorgungsvorrichtung integriert ist.

10. Vorrichtung (1) gemäß einem der vorstehenden Ansprüche, **dadurch gekennzeichnet, dass** der Auslegerarm (3) als Strangpressprofil, bevorzugt als Aluminium-Strangpressprofil, ausgebildet ist.

11. Vorrichtung (1) gemäß einem der vorstehenden Ansprüche, **dadurch gekennzeichnet, dass** zumindest ein Anschluss (4, 4', 4") auswechselbar und/oder modular ausgebildet ist.

12. Vorrichtung (1) gemäß einem der vorstehenden Ansprüche, **dadurch gekennzeichnet, dass** in dem Auslegerarm eine bauliche Trennung von elektrischen Bauteilen, insbesondere ein Anschluss (4) für elektrischen Strom und/oder ein (4') Anschluss für digitale und/oder analoge Daten, und den Anschlüssen (4") für medizinische Gase vorgesehen ist.

## Claims

1. Supply device (1) for providing at least one supply product, comprising
a mounting unit (2) for mounting the supply device (1) on a support, preferably a ceiling of a room, and
an extension arm (3), wherein the extension arm (3) is arranged pivotably around a vertical pivot axis (30) relative to the mounting unit (2),
**characterized in that**
the extension arm (3) is configured basically as an integral part along the longitudinal extension thereof and the extension arm (3) comprises at least one terminal (4, 4', 4") for a supply product which is directly integrated with the extension arm (3).

2. Device (1) according to claim 1, **characterized in that** a plurality of terminals (4, 4', 4") is integrated with the extension arm (3), and/or at least one terminal (4, 4', 4") is arranged on a side (34) of the extension arm (3) and/or a bottom side (35) of the extension arm (3).

3. Device (1) according to any one of the preceding claims, **characterized in that** a terminal (4, 4', 4") is configured as a terminal (4) for power supply, as terminal (4') for digital and/or analogous data, and/or as terminal (4") for a medical gas, wherein a terminal (4") for a medical gas is preferably configured to provide oxygen (O₂), medical air, carbon dioxide (CO₂), nitrous oxide (N₂O), Xenon (Xe), nitric oxide (NO), Helium (He), nitrogen (N₂), carbon monoxide (CO) and/or hydrogen sulfide (H₂S).

4. Device (1) according to any one of the preceding claims, **characterized in that** the extension arm (3) includes an operating grip (33) for positioning the extension arm (3).

5. Device (1) according to claim 4, **characterized in that** the operating grip (33) is configured in a way that the at least one line and/or at least one hose may be mounted on the operating grip (33), preferably may be hooked into it.

6. Device (1) according to any one of the preceding claims, **characterized in that** the extension arm (3) is further pivotable around a horizontal pivot axis (31) relative to the mounting unit (2), at least within a predefined angular range.

7. Device (1) according to any one of the preceding claims, **characterized in that** a position of the extension arm (3) relative to the vertical pivot axis (30) and/or to the horizontal pivot axis (31) may be fixed by friction, magnetism and/or pneumatics.

8. Device (1) according to any one of the preceding claims, **characterized in that** an engine unit, preferably an engine unit comprising an electric motor, is integrated with the supply device (1) for supporting a displacement of the position of the extension arm (3) relative to the vertical pivot axis (30) and/or to the horizontal pivot axis (31).

9. Device (1) according to any one of the preceding claims, **characterized in that** a spring swivel stand for supporting a displacement of the position of the extension arm (3) relative to the vertical pivot axis (30) and/or the horizontal pivot axis (31) is integrated with the supply device.

10. Device (1) according to any one of the preceding claims, **characterized in that** the extension arm (3) is configured as extruded profile, preferably as an extruded aluminum profile.

11. Device (1) according to any one of the preceding claims, **characterized in that** the at least one terminal (4, 4', 4") is configured in a replaceable and/or modular manner.

12. Device (1) according to any one of the preceding claims, **characterized in that** in the extension arm, a structural separation of electric components is provided, in particular a terminal (4) for power supply, and/or a terminal (4') for digital and/or analog data, and the terminals (4") for medical gases.

## Revendications

1. Dispositif d'alimentation (1) destiné à fournir au moins un produit d'alimentation, comprenant :
une unité de montage (2) permettant de monter le dispositif d'alimentation (1) sur un support, de préférence au plafond d'une pièce, et
un bras saillant (3), le bras saillant (3) étant agencé de manière à pouvoir pivoter par rapport à l'unité de montage (2) autour d'un axe de pivotement vertical (30),
**caractérisé en ce que**
le bras saillant (3) est conçu essentiellement d'un seul tenant le long de son extension longitudinale et le bras saillant (3) présente au moins un élément de raccordement (4, 4', 4") pour un produit d'alimentation et intégré directement dans le bras saillant (3).

2. Dispositif (1) selon la revendication 1, **caractérisé en ce qu'**une pluralité d'éléments de raccordement (4, 4', 4") est intégrée dans le bras saillant (3) et/ou au moins un élément de raccordement (4, 4', 4") est agencé sur un côté (34) du bras saillant (3) et/ou sur un côté inférieur (35) du bras saillant (3).

3. Dispositif (1) selon l'une quelconque des revendications précédentes, **caractérisé en ce qu'**un élément de raccordement (4, 4', 4") est conçu comme élément de raccordement (4) pour le courant électrique, comme élément de raccordement (4') pour les données numériques et/ou analogiques et/ou comme élément de raccordement (4") pour un gaz médical, un élément de raccordement (4") pour un gaz médical étant conçu de préférence afin de fournir de l'oxygène (O₂), de l'air médical, du dioxyde de carbone (CO₂), du gaz hilarant (N₂O), du xénon (Xe), du monoxyde d'azote (NO), de l'hélium (He), de l'azote (N₂), du monoxyde de carbone (CO) et/ou de l'hydrogène sulfuré (H₂S).

4. Dispositif (1) selon l'une quelconque des revendications précédentes, **caractérisé en ce que** le bras saillant (3) présente une poignée de commande (33) pour le positionnement du bras saillant (3).

5. Dispositif (1) selon la revendication 4, **caractérisé en ce que** la poignée de commande (33) est conçue de telle sorte qu'au moins un conduit et/ou au moins un tuyau peut être fixé, de préférence peut être accroché, à la poignée de commande (33).

6. Dispositif (1) selon l'une quelconque des revendications précédentes, **caractérisé en ce que** le bras saillant (3) peut en outre pivoter par rapport à l'unité de montage (2) autour d'un axe de pivotement horizontal (31) au moins dans une plage angulaire prédéterminée.

7. Dispositif (1) selon l'une quelconque des revendications précédentes, **caractérisé en ce qu'**une position du bras saillant (3) par rapport à l'axe de pivotement vertical (30) et/ou à l'axe de pivotement horizontal (31) peut être fixée par friction, magnétisme et/ou de manière pneumatique.

8. Dispositif (1) selon l'une quelconque des revendications précédentes, **caractérisé en ce qu'**une unité de moteur, de préférence une unité de moteur présentant un moteur électrique, est intégrée dans le dispositif d'alimentation (1) afin de soutenir un réglage de la position du bras saillant (3) par rapport à l'axe de pivotement vertical (30) et/ou à l'axe de pivotement horizontal (31).

9. Dispositif (1) selon l'une quelconque des revendications précédentes, **caractérisé en ce qu'**un support de pivotement à ressort permettant de supporter un réglage de la position du bras saillant (3) par rapport à l'axe de pivotement vertical (30) et/ou à l'axe de pivotement horizontal (31) est intégré dans le dispositif d'alimentation.

10. Dispositif (1) selon l'une quelconque des revendications précédentes, **caractérisé en ce que** le bras saillant (3) est réalisé sous la forme d'un profilé extrudé, de préférence sous la forme d'un profilé extrudé en aluminium.

11. Dispositif (1) selon l'une quelconque des revendications précédentes, **caractérisé en ce qu'**au moins un élément de raccordement (4, 4', 4") est conçu de manière interchangeable et/ou modulaire.

12. Dispositif (1) selon l'une quelconque des revendications précédentes, **caractérisé en ce que** dans le bras saillant est prévue une séparation structurelle des composants électriques, en particulier un élément de raccordement (4) pour le courant électrique et/ou un élément de raccordement (4') pour les données numériques et/ou analogiques, et les éléments de raccordement (4") pour les gaz médicaux.
